(19)

Europäisches Patentamt
European Patent Office
Office européen des brevets

(11)    EP 4 322 327 A1

(12)    **EUROPEAN PATENT APPLICATION**
published in accordance with Art. 153(4) EPC

(43)  Date of publication:
14.02.2024  Bulletin 2024/07

(21)  Application number: 22794584.7

(22)  Date of filing: 12.04.2022

(51)  International Patent Classification (IPC):
*H01Q 1/36* (2006.01)

(52)  Cooperative Patent Classification (CPC):
G01S 7/02; H01Q 1/27; H01Q 1/28; H01Q 1/32;
H01Q 1/36; H01Q 1/50; H01Q 21/00

(86)  International application number:
PCT/CN2022/086372

(87)  International publication number:
WO 2022/228113 (03.11.2022 Gazette 2022/44)

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30)  Priority:  25.04.2021  CN 202110448433

(71)  Applicant: Huawei Technologies Co., Ltd.
**Longgang
Shenzhen, Guangdong 518129 (CN)**

(72)  Inventors:
• YANG, Xiaopan
  **Shenzhen, Guangdong 518129 (CN)**
• GAO, Xiang
  **Shenzhen, Guangdong 518129 (CN)**
• TAO, Jun
  **Shenzhen, Guangdong 518129 (CN)**
• HE, Yin
  **Shenzhen, Guangdong 518129 (CN)**

(74)  Representative: **Isarpatent
Patent- und Rechtsanwälte
Barth Hassa Peckmann & Partner mbB
Friedrichstraße 31
80801 München (DE)**

(54)    **ANTENNA UNIT, FABRICATION METHOD THEREFOR, ARRAY ANTENNA, RADAR, AND TERMINAL**

(57)    This application relates to an antenna element, including a feeding part, a connection part, and two radiation parts. The connection part is connected between the feeding part and the radiation parts, and the feeding part is configured to separately feed a signal to the two radiation parts. The radiation part is constructed as a plate-shaped structure filled with metal, and the two radiation parts are spaced apart from each other. The radiation part includes a first edge part having a curved shape. A radiation direction of the first edge part departs from the connection part. A length L1 of the first edge part meets a condition: $1/8\lambda \leq L1 \leq 3/8\lambda$, where $\lambda$ is a wavelength, in a medium, of an electromagnetic wave signal transmitted by the antenna element. In the antenna element in this application, the two radiation parts are disposed opposite to each other, and a main radiation segment is formed by using first edge parts that are of the two radiation parts and that are in a curved shape, thereby reducing an aperture of an antenna, obtaining a wider radiation angle, and improving precision and sensitivity. This application further relates to an antenna element manufacturing method, an antenna array, a radar, and a terminal.

FIG. 13

EP 4 322 327 A1

**Description**

This application claims priority to Chinese Patent Application No. 202110448433.3, filed with the China National Intellectual Property Administration on April 25, 2021 and entitled "ANTENNA ELEMENT AND MANUFACTURING METHOD THEREOF, ARRAY ANTENNA, RADAR, AND TERMINAL", which is incorporated herein by reference in its entirety.

**TECHNICAL FIELD**

This application relates to the antenna field, and in particular, to an antenna element, an antenna element manufacturing method, an array antenna including the antenna element, a radar including the antenna element or the array antenna, and a terminal product including the radar.

**BACKGROUND**

Most current terminal products are configured with medium-range and long-range radars, angle radars, and the like, to implement operations such as automatic cruise, blind spot monitoring, and target detection. However, the medium-range and long-range radars, the angle radars, and the like have limitations of a narrow angle of view and incapability of implementing all-round detection. In some cases in which scenarios are complex, for example, nearby obstacles are close or dense, a terminal product further needs to be configured with a short-range or ultra-short-range radar to implement an all-round obstacle detection function.

Most of existing ultra-short-range radars use ultrasonic technologies, have a defect of incompatibility between sensitivity and a detection angle, and are easily affected by weather. However, other forms of antenna radars usually have defects such as a narrow horizontal or vertical beam width and small coverage.

**SUMMARY**

An objective of this application is to provide an antenna element having large horizontal and vertical coverage and having both precision and sensitivity. In addition, this application further relates to an antenna element manufacturing method, an array antenna including the antenna element, a radar including the antenna element or the array antenna, and a terminal including the radar.

According to a first aspect, this application relates to an antenna element, including a feeding part, a connection part, and two radiation parts. The connection part is connected between the feeding part and the radiation parts, and the feeding part is configured to separately feed a signal to the two radiation parts. The radiation part is constructed as a plate-shaped structure filled with metal, and the two radiation parts are disposed at a spacing. The radiation part further includes a first edge part, the first edge part is in a curved shape, a radiation direction of the first edge part faces a direction in which the radiation part departs from the connection part, and a length L1 of the first edge part meets a condition: $1/8\lambda \leq L1 \leq 3/8\lambda$, where $\lambda$ is a wavelength, in a medium, of an electromagnetic wave signal transmitted by the antenna element. A person skilled in the art may know that the medium may be a medium plate where the antenna element is located, air, or a possible medium related to the antenna element, depending on a specific scenario design.

In the antenna element in this application, a signal fed by the feeding part is separately transmitted to the two radiation parts by using the connection part, and the signal is simultaneously transmitted outward through the two radiation parts spaced apart from each other. By providing the radiation part as a plate-shaped structure filled with metal, the first edge part is formed at an edge of the radiation part. A length of the first edge part is set, so that the first edge part can form a main radiation segment of a corresponding radiation part of the first edge part. The radiation direction of the first edge part is set, so that the two radiation parts can propagate signals in two directions that are axisymmetric to each other.

In the antenna element in this application, the first edge part is constructed as a curved shape, so that when a current flows through the first edge part, a current path of the current is longer than a flow path of the current obtained when the first edge part is constructed as a straight line shape. Therefore, a length size of the first edge part serving as the main radiation segment in the radiation direction of the first edge part is reduced, and a diameter of the radiation unit is reduced, to obtain a wider beam width. Further, when the two radiation parts are spaced apart and propagate a signal in axisymmetric directions, an antenna diameter of the antenna element in this application is further reduced, and a beam width is further increased. When the antenna elements in this application are used to form an antenna array or form a radar, high distance resolution and angle resolution can be further obtained by setting a diameter and a bandwidth of the array antenna, to meet a requirement of a use scenario.

In a possible implementation, there are two connection parts, the two connection parts are also disposed at a spacing, and each connection part is connected between the feeding part and one radiation part.

In this implementation, the two connection parts are disposed, and the connection parts are spaced apart from each other, to respectively connect the feeding part to the two radiation parts, to ensure that no electrical connection relationship is formed between the two radiation parts due to the connection parts. A coupling phenomenon that may be caused by electrical connection of the two radiation parts to each other is avoided.

In a possible implementation, there is a phase difference of 180 degrees between signals that are separately transmitted by the two connection parts to the radiation parts connected to the two connection parts.

In a possible implementation, the two radiation parts are located on a same plane, and are disposed at a spacing on the plane. Alternatively, the two radiation parts are respectively located on a first plane and a second plane, and the first plane and the second plane are disposed at a spacing.

In this implementation, based on different antenna forms, the two radiation parts may be disposed on a same plane, or the two radiation parts may be respectively disposed on two different planes, to facilitate manufacturing of radiation parts in antenna elements of different forms.

In a possible implementation, the two radiation parts are located on a same plane, and a difference between extension path lengths of the two connection parts is $1/2\lambda$.

In this implementation, the extension path lengths of the two connection parts are set to be different, so that when a signal fed by the feeding part separately reaches the two radiation parts, a phase difference of 180 degrees exists between two signals reaching the two radiation parts.

In a possible implementation, the two radiation parts are respectively located on the first plane and the second plane, and the first plane is parallel to the second plane.

In this implementation, the two radiation parts are disposed on two planes that are parallel to each other, so that a spacing size between the two radiation parts is controlled, and a coupling phenomenon between the two radiation parts can be better controlled.

In a possible implementation, the two radiation parts are respectively located on the first plane and the second plane, the two connection parts are also respectively located on the first plane and the second plane, and a projection, on the second plane, of a connection part located on the first plane at least overlaps a shape of the connection part located on the second plane.

In this implementation, the two connection parts have a same shape and an equal size, losses of signals fed into the feeding part are approximately the same, and signals fed into the two radiation parts tend to be the same. In addition, positions of the two connection parts at least overlap, so that the two radiation parts can feed in signals from roughly the same positions and then respectively transmit the signals outward.

In a possible implementation, shapes and sizes of the two radiation parts are the same, and radiation directions of two first edge parts are axisymmetric.

In this implementation, the two radiation parts are provided with the same shape and the same size, so that after the signals are respectively fed into the two radiation parts, the signals can respectively flow through the two radiation parts through similar current paths. However, when the radiation directions of the two first edge parts are set to be axisymmetric to each other, signals propagated outward by the two radiation parts can be controlled to mirror each other, thereby helping control shape symmetry of a horizontal directivity pattern of the antenna element in this application.

In a possible implementation, the antenna element further includes two directors, and the directors each correspond to a first edge part of a radiation part and are disposed at a spacing.

In this implementation, a directing effect may be formed, by disposing a director, on a radiation part corresponding to the director, thereby further broadening horizontal coverage of the antenna element in this application.

In a possible implementation, the director includes at least one parasitic segment, and a shape of the parasitic segment matches the shape of the first edge part.

In this implementation, the shape of the parasitic segment is set to match the shape of the first edge part, so that the parasitic segment can form a better directing effect on a radiation part corresponding to the parasitic segment, thereby improving work efficiency of the director.

In a possible implementation, the director includes a plurality of parasitic segments, and the plurality of parasitic segments are arranged at spacings, and/or sizes of the plurality of parasitic segments are sequentially reduced.

In this implementation, the plurality of parasitic segments are sequentially arranged at spacings, so that the directing effect of the director can be further improved. In addition, the sizes of the plurality of parasitic segments are sequentially reduced, so that area overheads of the antenna element in this application can be reduced. When the antenna elements in this application form an array antenna, it is avoided that two adjacent antenna elements form a cross and cause coupling.

In a possible implementation, the antenna element is constructed on a substrate. When the two radiation parts are on the same plane, the two radiation parts are located on a same outer surface of the substrate. When the two radiation parts are respectively located on the first plane and the second plane, two outer surfaces that are of the substrate and that are opposite to each other are respectively configured as the first plane and the second plane.

In this implementation, the antenna element in this application may be formed as an antenna structure carried by a printed circuit board. In addition, two radiation parts are made by using an outer surface of the printed circuit board, and the two radiation parts may be located on one outer surface of the printed circuit board, or may be respectively located on two opposite outer surfaces of the printed circuit board, so that a manufacturing process of the radiation part is simplified.

In a possible implementation, the length L1 of the first edge part meets a condition: $L1=1/4\lambda$.

In this implementation, the length of the first edge part is further limited, so that the length L1 of the first edge part is 1/4λ. Therefore, radiation efficiency of the first edge part can be improved, and larger horizontal coverage can be obtained.

In a possible implementation, the feeding part feeds electricity in one manner of a substrate integrated waveguide, microstrip feeding, or coaxial feeding.

In this implementation, the foregoing structure of the feeding part can meet a feeding requirement of the radiation part, and it is convenient for the antenna element in this application to select a suitable feeding manner based on different application scenarios, thereby improving an environment compatibility capability of the antenna element.

In a possible implementation, the feeding part feeds the electricity by using the substrate integrated waveguide, and a channel width L2 of the substrate integrated waveguide meets a condition: $3/8\lambda \leq L2 \leq 5/8\lambda$.

In this implementation, when the feeding part feeds the electricity by using the substrate integrated waveguide, limiting the channel width of the substrate integrated waveguide may improve feeding efficiency of the feeding structure.

According to a second aspect, this application relates to an antenna element manufacturing method, including the following steps:

disposing a feeding part on a substrate; and disposing a connection part and two radiation parts spaced apart from each other, and connecting the two radiation parts to the feeding part by using the connection part. The radiation part is a plate-shaped structure filled with metal, and includes a first edge part having a curved shape. A radiation direction of the first edge part departs from the connection part. A length L1 of the first edge part meets a condition: $1/8\lambda \leq L1 \leq 3/8\lambda$, where λ is a wavelength, in a medium, of an electromagnetic wave signal transmitted by an antenna element.

It may be understood that the antenna element manufacturing method provided in the second aspect of this application may be used to manufacture the antenna element provided in the first aspect of this application. The feeding part is manufactured on the substrate, and the connection part and the radiation parts may also be manufactured on the substrate, or the connection part and the radiation parts are directly formed by using a structure of a sheet metal antenna. Because of a mating relationship between the connection part and the radiation parts, the connection part and the radiation parts may be manufactured at the same time, or may be manufactured and assembled separately. A structure limitation of the radiation part in the method of this application is the same as that of the antenna element in the first aspect. Therefore, beneficial effect obtained by using the antenna element obtained by using the method is similar to beneficial effect of the foregoing antenna element, and expansion of embodiments thereof may also be obtained based on implementations of the antenna element. Details are not described herein again in this specification.

According to a third aspect, this application relates to an array antenna, including a transmit component and a receive component that are arranged at a spacing. The transmit component and the receive component include at least one antenna element provided in the first aspect of this application.

In the array antenna provided in the third aspect of this application, the transmit component may include at least one antenna element provided in the first aspect of this application, to expand overall horizontal coverage of the transmit component. The receive component may also include at least one antenna element provided in the first aspect of this application, to expand overall horizontal coverage of the receive component. In this application, the array antenna may achieve larger area coverage in a transmission and/or reception process, and has both precision and sensitivity, thereby implementing a better detection capability.

In a possible implementation, the array antenna further includes a planar lens or a radome, to adjust a direction or a coverage angle of a radiation beam of the array antenna.

In this implementation, the direction or the coverage angle of the radiation beam of the array antenna is adjusted by using the radome, so that the radiation direction of the array antenna is offset towards a preset direction. Further, on a basis that inherent coverage of the array antenna is large, a detection direction of the array antenna is further guided, and the array antenna is protected.

According to a fourth aspect, this application relates to a radar, including a microwave integrated circuit, and the antenna element provided in the first aspect of this application, or the array antenna provided in the third aspect of this application. The microwave integrated circuit is electrically connected to the antenna element or the array antenna.

The radar of the fourth aspect of this application includes the antenna element of the first aspect of this application or the array antenna of the third aspect of this application, so that the radar in this application has a larger angle of detecting a signal and receiving a signal. After being connected to the antenna element or the array antenna through the microwave integrated circuit, a detection capability can be achieved in a larger angle range, and both precision and sensitivity can be achieved.

According to a fifth aspect, this application further relates to a terminal, including the radar provided in the fourth aspect of this application. Further, the terminal may be an intelligent manufacturing device, a smart home device, a surveying and mapping device, or an intelligent transportation device (for example, a vehicle, an uncrewed aerial vehicle, or a robot). Further, an installation position of the radar on the terminal is not limited to inside or outside, depending on a specific function requirement.

In the terminal provided in the fifth aspect of this application, because the radar provided in the fourth aspect of this application is used, the terminal in this application can better implement an all-round detection function, to avoid a detection dead angle of a terminal product, and further ensure reliable operation of the terminal product.

## BRIEF DESCRIPTION OF DRAWINGS

FIG. 1 is a schematic diagram of an antenna action region of a vehicle that is used as an example of a terminal according to this application;

FIG. 2 is a schematic diagram of a plane structure of an antenna element according to an embodiment of this application;

FIG. 3 is a schematic diagram of a partial plane of a connection part and a radiation part on one side of the antenna element provided in FIG. 2;

FIG. 4 is a directivity pattern obtained through simulation calculation of the antenna element provided in FIG. 2;

FIG. 5 is a schematic diagram of a structure of a vehicle-mounted antenna in an existing technical solution;

FIG. 6a, FIG. 6b, and FIG. 6c each are a schematic diagram of a plane of a radiation part in an antenna element according to some other embodiments of this application;

FIG. 7a and FIG. 7b each are a schematic diagram of a plane of an antenna element according to some other embodiments of this application;

FIG. 8 is a schematic diagram of a plane of an antenna element according to another embodiment of this application;

FIG. 8a is a schematic diagram of a partial plane of the antenna element provided in FIG. 8;

FIG. 9 is a schematic diagram of a cross section of the antenna element provided in FIG. 8;

FIG. 10 is a directivity/pitch pattern obtained through simulation calculation of the antenna element provided in FIG. 8;

FIG. 11 is a schematic diagram of a cross section of another antenna element according to an embodiment of this application;

FIG. 12 is a schematic diagram of a cross section of another antenna element according to an embodiment of this application;

FIG. 13 is a schematic diagram of a plane of another antenna element according to an embodiment of this application;

FIG. 14 is a schematic diagram of a partial plane of a radiation part and a director in the antenna element provided in FIG. 13;

FIG. 15 is a schematic diagram of a plane of a director in the antenna element provided in FIG. 14;

FIG. 16a, FIG. 16b, and FIG. 16c are respectively schematic diagrams of planes of radiation parts and directors in the antenna elements corresponding to FIG. 6a, FIG. 6b, and FIG. 6c;

FIG. 17 is a schematic diagram of a plane of an array antenna according to this application;

FIG. 18a, FIG. 18b, and FIG. 18c are separately directivity patterns of different channels obtained through simulation calculation of the array antenna provided in FIG. 17;

FIG. 19 is a directivity/pitch pattern at different frequencies obtained through simulation calculation of the array antenna provided in FIG. 17; and

FIG. 20 is a schematic diagram of adjusting a radiation angle of the array antenna provided in FIG. 17 by using a vehicle as an example.

## DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

A radar is disposed on a terminal product in this application, and is configured to detect an obstacle or a target object. For example, when the terminal product is an intelligent transportation device such as a vehicle, an obstacle detection function may be implemented by using a radar disposed on a vehicle body. Alternatively, when it is detected, by using a radar disposed in a cockpit, that a user enters or leaves the vehicle, some functions are correspondingly enabled or disabled. For obstacle detection, the terminal product in this application may also be a smart home device or an intelligent manufacturing device, for example, an uncrewed aerial vehicle, an electric toy, a robot, or a robotic arm. In a detection process, the terminal product needs to identify an obstacle or a target object in an ambient environment, to achieve a function of detecting the obstacle and avoiding collision or accurately identifying the target object. For ease of description, an embodiment of this application describes an application of a radar in a terminal product by using an example in which a vehicle detects an obstacle.

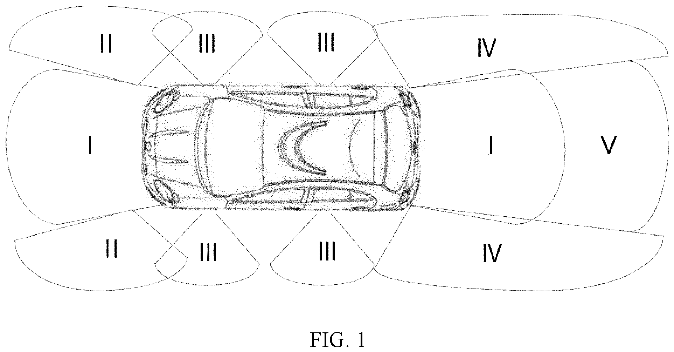

FIG. 1 is a schematic diagram of using a radar by a vehicle according to an embodiment of this application. In this embodiment, the vehicle may be a gasoline-powered or diesel-powered vehicle, may also be an electric vehicle, a hybrid vehicle, or the like. The vehicle may use the radar in one or more radar use manners shown in FIG. 1.

In the vehicle shown in FIG. 1, a plurality of radar detection regions are provided based on a top-view structure of the vehicle. In an I$^{th}$ region, a parking assist system (Parking Assist System, PAS) and/or an automatic parking assist (Auto Parking Assist, APA) system may be disposed directly in front and rear of the vehicle. In a II$^{th}$ region, a cross traffic assist (Cross Traffic Assist, CTA) system may be disposed in left diagonal front and right diagonal front of the vehicle. In a III$^{th}$ region, an automatic parking assist (Auto Parking Assist, APA) system, a parking lot vulture (Parking Lot Vulture, PLV) system, a side view (Side View) system, and the like may be disposed on both sides of the vehicle. In a IV$^{th}$ region, a door open alarm (Door Open Alarm, DOA) system, a rear cross traffic alert (Rear Cross Traffic Alert, RCTA) system, a blind spot vehicle discern system (Blind spot vehicle Discern System, BSD), a lane change assist (Lane Change Assist, LCA) system, and the like may be disposed in left diagonal rear and right diagonal rear of the vehicle. In a V$^{th}$ region, a rear automatic emergency braking (Rear Automatic Emergency Braking, R-AEB) system and the like may be further disposed slightly behind the vehicle.

For the above-described I$^{th}$ to V$^{th}$ regions, corresponding radars are used to implement region monitoring, namely, medium-range and long-range radars, an angle radar, and the like mentioned above. Most of these radars have characteristics of a long detection distance and a narrow detection angle. However, for the vehicle, in a scenario in which obstacles are dense, such as a congested road or a parking lot, a vehicle speed is usually slow, and obstacle detection needs to be performed in a 360-degree range region of the entire vehicle. Therefore, the vehicle in this application further needs to be provided with a radar that has a larger detection angle and that is used for short-distance obstacle detection, to implement the 360-degree region detection of the entire vehicle. It may be understood that, for a terminal product such as an uncrewed aerial vehicle, an electric toy, a robot, or a robotic arm, there are also dense surrounding obstacles in respective use scenarios of the terminal product, and the radar in this application may also be used to perform obstacle detection.

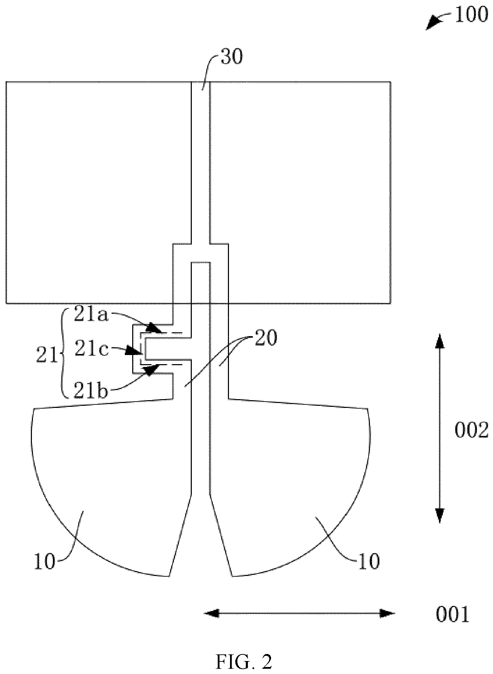

FIG. 2 shows an antenna element 100 according to an embodiment of this application. The antenna element 100 may be disposed in a radar in this application, configured to implement an obstacle detection operation in a large angle range. The antenna element 100 in this application includes a feeding part 30, a connection part 20, and two radiation parts 10. The two radiation parts 10 are separately electrically connected to the feeding part 30 through the connection part 20. The radar of this application may include a microwave integrated circuit (not shown in the figure). The microwave integrated circuit is electrically connected to the feeding part 30, and is configured to feed a signal to the feeding part 30, and transmit the signal to the two radiation parts 10 via the connection part 20, and then the radiation parts 10 propagate the signal outward. Alternatively, the two radiation parts 10 may be configured to receive an external signal, and transmit the external signal to the feeding part 30 through the connection part 20, to return the external signal received by the two radiation parts 10 to the microwave integrated circuit.

In the embodiment shown in FIG. 2, the two radiation parts 10 are located on a same plane, and the two radiation parts 10 are disposed at a spacing along a first direction 001 in the plane. There are also two connection parts 20, and the two connection parts 20 are also disposed at a spacing along the first direction 001. Because the connection parts 20 are connected between the feeding part 30 and the radiation parts 10, the two connection parts 20 disposed at a spacing each may transmit a signal fed by the feeding part 30 to a radiation part 10 correspondingly connected to the connection part 20. In an embodiment, an extension path length difference of the two connection parts 20 is further set. A total length of one connection part 20 is longer than a total length of another connection part 20, and a difference between total lengths of the two connection parts 20 is $1/2\lambda$, where $\lambda$ is a wavelength of a signal fed by the feeding part 30, namely, a wavelength corresponding to an operating frequency of the radiation part 10, or is described as a wavelength, in a medium, of an electromagnetic wave signal transmitted by the antenna element 100 in this application. Specifically, the total length of the connection part 20 may be understood as, along an extension path of the connection part 20, a total distance from an end that is of the connection part 20 and that is connected to the feeding part 30 to an end that is of the connection part 20 and that is connected to the radiation part 10.

In the schematic diagram of FIG. 2, a bending section 21 is disposed on one of the connection parts 20, and an extension path of the bending section 21 includes a first bending section 21a and a second bending section 21b that are parallel to each other, and a parallel section 21c connected between the first bending section 21a and the second bending section 21b. As can be seen in FIG. 2, the parallel section 21c extends along a direction parallel to a remaining length of the connection part 20. A length of the connection part 20 provided with the bending section 21 is longer than that of the connection part 20 not provided with the bending section 21, where a length difference is lengths of the first bending section 21a and the second bending section 21b. Further, a sum of the lengths of the first bending section 21a and the second bending section 21b is set to L3, and a length of L3 is approximately $1/2\lambda$, to implement a total length difference between the two connection parts 20. In such a disposition, after the two connection parts 20 receive electrical signals fed by the same feeding part 30, a phase difference of approximately 180 degrees exists between the electrical signals respectively transmitted by the two connection parts 20 to the two radiation parts 10, and the two radiation parts 10 respectively propagate outward the two signals whose phase difference is 180 degrees, and implement respective horizontal coverage of the two radiation parts 10. It should be noted herein that, due to an error caused by product process design or manufacturing, an actual value may be deviated to an extent. Therefore, the "approximately" expression is used above to cover all possible error ranges caused by process design or manufacturing. In addition, a structure of the bending section 21 may also be implemented in another manner. As long as there is a length difference of approximately $1/2\lambda$ between the two connection parts 20, there may be the phase difference of approximately 180 degrees between the electric signals of the two radiation parts 10.

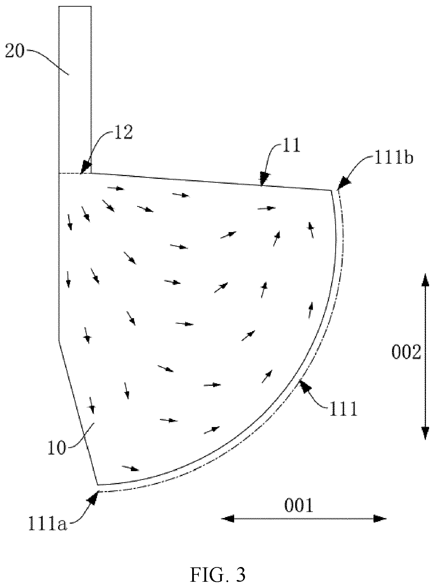

FIG. 3 shows a partial plane structure of a connection part 20 and a radiation part 10 on one side in the embodiment of FIG. 2. The radiation part 10 of this application is constructed as a metal-filled structure and is substantially plate-shaped. The plate-shaped radiation part 10 has an outer edge 11. Refer to FIG. 3. When an electrical signal is transferred from the connection part 20 to the radiation part 10, a current is formed inside the metal-filled radiation part 10, and when the current flows through the outer edge 11, an electromagnetic wave signal is formed and radiated to the outside. In the schematic diagram of FIG. 3, the radiation part 10 is substantially sector-shaped. However, in other embodiments, the radiation part 10 may alternatively have other shapes.

The radiation part 10 of this application has a first edge part 111. The first edge part 111 is a section of the outer edge 11 of the radiation part 10. The first edge part 111 has a curved shape, and includes a first end 111a and a second end 111b opposite to each other in an extension path of the first edge part 111. The first end 111a forms an inflection point on the outer edge 11, and the second end 111b also forms an inflection point on the outer edge 11. It may be understood that the first edge part 111 in the curved shape has a continuous curved structure between the first end 111a and the second end 11 1b. In other words, in an extension path of the outer edge 11, an extension path from the first end 111a to the second end 111b is in a form of a continuous curve.

When the current on the radiation part 10 flows through the first edge part 111, outward radiation is also formed. In the antenna element 100 in this application, a length L1 of the first edge part 111 is defined to meet a condition: $1/8\lambda \leq L1 \leq 3/8\lambda$. In this case, the first edge part 111 is formed as a continuous radiation segment, and the current on the radiation part 10 may radiate outward from the first edge part 111 along a same radiation direction. However, the length L1 of the first edge part 111 is limited to ensure signal radiation intensity of the radiation segment formed by the first edge part 111.

In the antenna element 100 in this application, a position of the first edge part 111 of the radiation part 10 is further limited. Specifically, the first edge part 111 is located at a position that is of the radiation part 10 and that is away from the connection part 20, so that a radiation direction of the first edge part 111 faces a direction away from the connection part 20. Specifically, the plate-shaped radiation part 10 has a connection portion 12 that is conductive to the connection part 20. The radiation part 10 extends outward in a direction that is along the first direction 001 and that is away from the connection portion 12. In this case, the outer edge 11 of the radiation part 10 is connected to the connection portion 12, and the first edge part 111 and the connection portion 12 are spaced apart from each other. In other words, the first end 111a and the second end 111b of the first edge part 111 are separately spaced apart from the connection portion 12. Because the radiation part 10 as a whole extends outward along the first direction 001 compared with the connection part 20, the first edge part 111 is also located at a position that is of the radiation part 10 and that is away from the connection portion 12, and the radiation direction of the first edge part 111 is also a direction away from the connection part 20.

It should be noted that, in the schematic diagram of FIG. 2, a structure in which the radiation part 10 extends outward along the first direction 001 is simultaneously extended outward relative to the two connection parts 20. Because the two radiation parts 10 are disposed at a spacing along the first direction 001, to ensure direction coverage of the antenna element 100, the two radiation parts 10 need to extend in opposite directions along the first direction 001, so that the first edge parts 111 of the two radiation parts 10 radiate in opposite directions, and greater direction coverage is obtained. At this time, the two connection parts 20 are also spaced apart from each other along the first direction 001 and are located at positions close to each other, and the two radiation parts 10 are located at positions far away from each other.

In a second direction 002 perpendicular to the first direction 001, when the connection part 20 is connected between the feeding part 30 and the radiation part 10, the connection part 20 extends along the second direction 002. The radiation part 10 is also located on one side of the connection part 20 along the second direction 002. In this case, in the antenna element 100 in this application, a position of a single radiation part 10 relative to a connection part 20 connected to the single radiation part 10 is located on one side of the connection part 20 along the first direction 001, and is also located on one side of the connection part 20 along the second direction 002. In addition, in this case, the first edge part 111 of the radiation part 10 is located, along the first direction 001, on one side away from the connection part 20, and is also located, along the second direction 002, on one side away from the connection part 20.

Refer to the embodiment of FIG. 2, the two radiation parts 10 of the antenna element 100 are located on a same side of the connection part 20 along the second direction 002, and the connection part 20 is connected to the feeding part 30 relative to another side of the two radiation parts 10. However, in the first direction 001, each of the two radiation parts 10 extends in a direction away from the connection part 20. However, the outer edges 11 of the two radiation parts 10 each have a first edge part 111, and the two first edge parts 111 are separately disposed in opposite directions along the first direction 001, and are located on a same side of the connection part 20 along the second direction 002. In this case, radiation directions of the two first edge parts 111 are also opposite to each other along the first direction 001, and face a same direction along the second direction 002 at the same time.

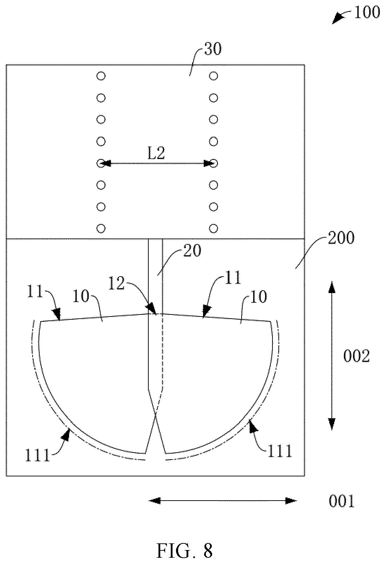

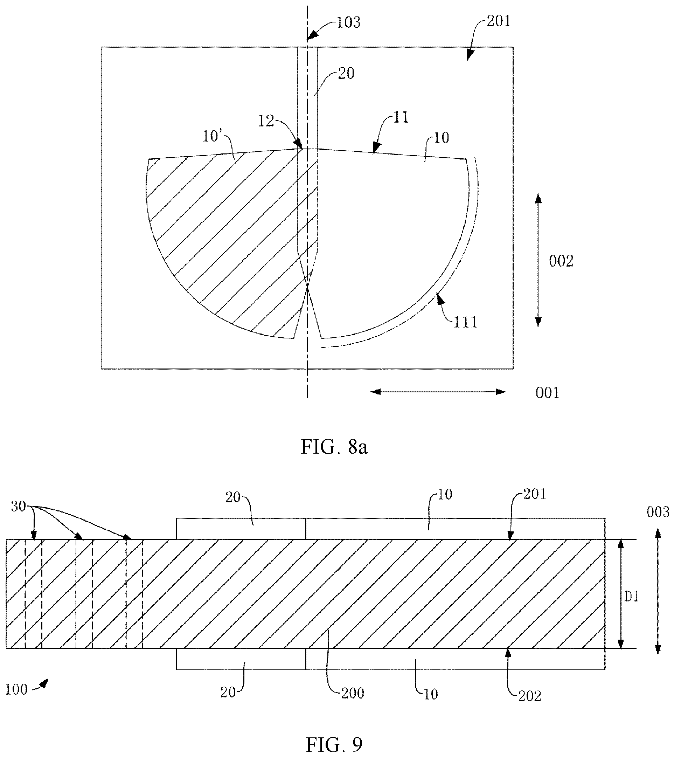

It should be noted that, in the schematic diagram of FIG. 8a, a first axis 103 may be defined between the two radiation parts 10 (where the first axis 103 herein is provided for clear solution description, that is, the first axis 103 is a virtual reference line, and there is no structure of the first axis 103 in an actual product). The first axis 103 is perpendicular to the first direction 001 and parallel to the second direction 002. In other words, an extension direction of the first axis 103 is parallel to an extension direction of the connection part 20. The radiation directions of the two first edge parts 111 are symmetrical compared with the first axis 103. Since the radiation direction of the first edge part 111 is formed as a main radiation direction of the radiation part 10, it may also be understood that the main radiation directions of the two radiation parts 10 are symmetrical compared with the first axis 103.

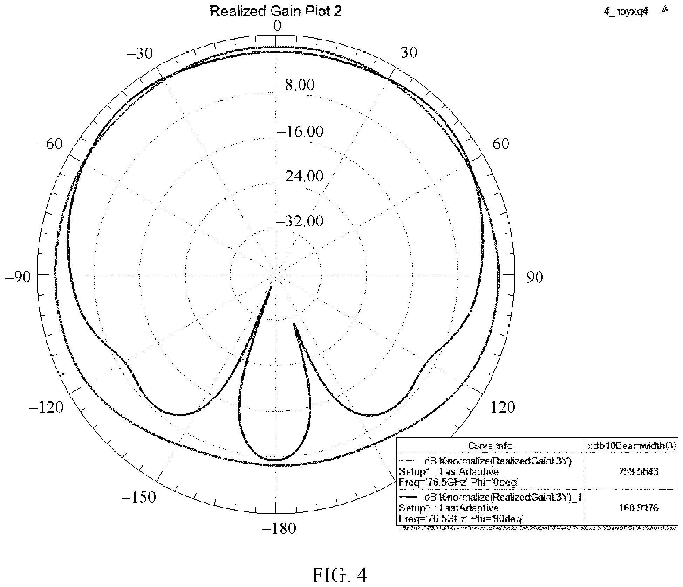

With a setting of the lengths L1 of the two first edge parts 111, the antenna element 100 in this application may have good horizontal coverage. FIG. 4 shows a possible directivity pattern obtained through simulation calculation of the antenna element 100. In this possible design, the lengths L1 of the first edge parts 111 of the two radiation parts 10 are both $1/4\lambda$, and a frequency of a signal fed by the feeding part 30 is 76.5 GHz. When the length L1 of the first edge part $111=1/4\lambda$, radiation efficiency of the first edge part 111 is higher. In this case, the first edge part 111 may be used as a main radiation segment of the radiation part 10, and the lengths L1 of the first edge parts 111 of the two radiation parts 10 are equal. A sum of the lengths of the two first edge parts 111 is $1/2\lambda$, and 76 GHz to 81 GHz are dedicated frequency bands for vehicle-mounted antennas. It can be learned from simulation in FIG. 4 that, a 3 dB beam width of the antenna element 100 in this application in a direction of a plane on which the antenna element 100 is located is greater than 160 degrees.

It should be pointed out that, due to a manufacturing process error, there may be an error within a range between an actual size of the first edge part 111 in the antenna element 100 and a value of $L1=1/4\lambda$. By limiting the length L1 of the first edge 111 to meet a condition: $1/8\lambda \leq L1 \leq 3/8\lambda$, it can be ensured that direction coverage of the antenna element 100 is large, and beneficial effect similar to that obtained when $L1=1/4\lambda$ is achieved.

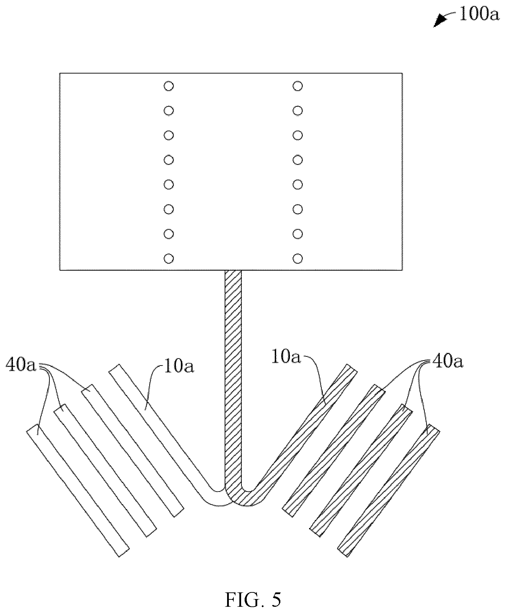

FIG. 5 is a schematic diagram of a structure of a vehicle-mounted antenna 100a in another solution in the conventional technology. In the schematic diagram of FIG. 5, the vehicle-mounted antenna 100a is constructed as a structure of a heteroplanar dipole antenna, a radiation segment 10a of the vehicle-mounted antenna 100a is linear, and radiation directions of two radiation segments 10a are also opposite. Further, symmetric directors 40a are further disposed on both sides of the radiation segment 10a of the vehicle-mounted antenna 100a. A 3 dB beam width in a horizontal direction of the vehicle-mounted antenna 100a shown in FIG. 5 is about 123 degrees, which is less than a horizontal beam width of the antenna element 100 in this application.

Because the first edge part 111 of the radiation part 10 in the antenna element 100 in this application is constructed as a curved shape, when a current flows through the first edge part 111, a current path of the current is longer than a current path of the current obtained when the first edge part is constructed as a straight line shape. Therefore, an antenna diameter in the antenna element 100 is smaller than a diameter of the vehicle-mounted antenna 100a in the another solution. Alternatively, on a premise that diameters of antennas are the same, the first edge part 111 in the antenna element 100 in this application is constructed as a curved shape, and a flow path of a current of the first edge part 111 is longer than a flow path of a current obtained when the first edge part 111 is constructed as a straight line shape in the another solution. In this way, the antenna element 100 in this application can obtain a larger radiation angle, thereby implementing larger coverage in a horizontal direction.

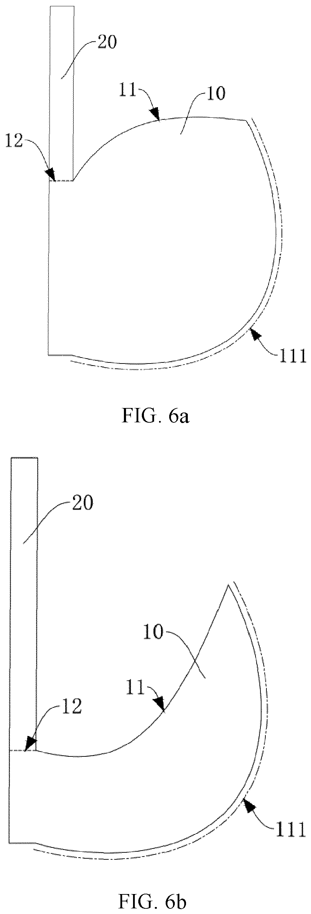

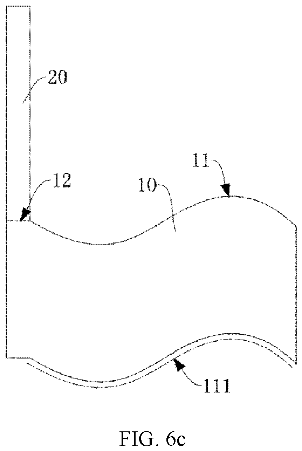

A shape of the radiation part 10 is not particularly limited in the antenna element 100 in this application, and correspondingly, a specific shape of the first edge part 111 is not particularly limited. Refer to the schematic diagrams in FIG. 6a, FIG. 6b, and FIG. 6c. In addition to the foregoing sector-shaped structure, the radiation part 10 may be roughly in a crescent-shaped structure, a blade-shaped structure, or a flag-shaped structure, and the corresponding first edge part 111 is also in an arc-shaped structure or a wavy structure. As long as the shape of the first edge part 111 is a continuous curved shape, and inflection points are respectively formed at the first end 111a and the second end 111b of the first edge part 111, the antenna diameter of the antenna element 100 in this application may be reduced, thereby forming a longer current path, and extending direction coverage of the antenna element 100.

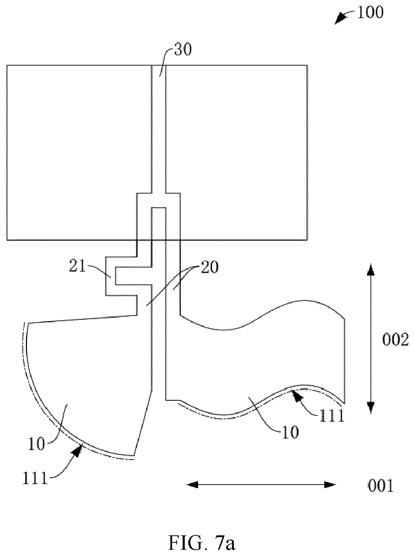

In addition, the antenna element 100 in this application does not limit shapes of the two radiation parts 10 to be consistent. As shown in the embodiment of FIG. 7a, the shapes of the two radiation parts 10 may be different, that is, a shape of one radiation part 10 is substantially sector-shaped, and a shape of another radiation part 10 is substantially blade-shaped. In this case, the two first edge parts 111 are of an asymmetric structure, and shapes of signals propagated outward on sides on which the two first edge parts 111 are located are also different.

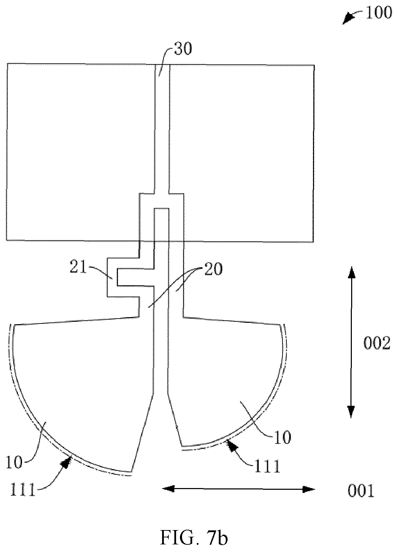

In addition, the antenna element 100 in this application does not limit sizes of the two radiation parts 10 to be the same. As shown in the embodiment of FIG. 7b, when shapes of the two radiation parts 10 are both substantially sector-shaped, the sizes of the two radiation parts 10 are also different. Correspondingly, length values of respective first edge parts 111 of the two radiation parts 10 are also different. That a value of the length L1 of the first edge part 111 shown in FIG. 4 is 1/4λ is merely used as an example, as long as it is ensured that the lengths L1 of the two first edge parts 111 meet the condition: 1/8λL1≤3/8λ, and the two first edge parts 111 simultaneously work in a same frequency band, large horizontal direction coverage is obtained.

It should be pointed out that, the simulation of the antenna element 100 in FIG. 4 is expanded based on a signal whose center frequency is 76.5 GHz, because the frequency is within a frequency band of the vehicle-mounted antenna. In some other embodiments, a frequency band of the antenna element 100 in this application may also be about 24 GHz, and is used as a roadside radar. It may be understood that, based on the antenna element 100 in this application being assembled on different terminal products, an operating frequency band of the antenna element 100 may also be correspondingly adjusted, and a value of a wavelength λ, in a medium, of an electromagnetic wave signal transmitted by the antenna element or a wavelength corresponding to an operating frequency of the radiation part may also be correspondingly adjusted. The size of the radiation part 10 is set based on the operating frequency of the antenna element 100 assembled on the corresponding terminal product, so that a design solution of the antenna element 100 provided in this application may be adapted to the terminal product.

The antenna element 100 may be constructed on a substrate, so that the two radiation parts 10 and the two connection parts 20 are located on a same outer surface of the substrate. The substrate may be a printed circuit board (Printed Circuit Board, PCB) or of a substrate structure in another form. Alternatively, the antenna element 100 may be constructed as an antenna of a sheet metal structure. Both the connection part 20 and the radiation part 10 of the antenna element 100 have a rigidity, and may directly extend from the feeding part 30, and maintain relative positions of the two radiation parts 10, to meet a working requirement of the antenna element 100.

Refer to schematic diagrams of another implementation of the antenna element 100 shown in FIG. 8 and FIG. 9. FIG. 8 is a schematic diagram of a plane of the antenna element 100 in this implementation, and FIG. 9 is a schematic cross-sectional diagram of the antenna element 100 in this implementation. In this implementation, the antenna element 100 is constructed on a dielectric plate 200. The dielectric plate 200 includes a first outer surface 201 and a second outer surface 202 that are opposite to each other. The two radiation parts 10 of the antenna element 100 are respectively located on the first outer surface 201 and the second outer surface 202.

Both the first outer surface 201 and the second outer surface 202 of the dielectric plate 200 are planar, that is, the first outer surface 201 of the dielectric plate 200 may be constructed as a first plane, where one radiation part 10 is formed on the first outer surface 201, and the second outer surface 202 may be configured as a second plane, where another radiation part 10 is formed on the second outer surface 202.

The antenna element 100 is constructed on the dielectric plate 200, and the radiation parts 10 are separately made by using the two opposite outer surfaces of the dielectric plate 200. In this way, the two radiation parts 10 are parallel to each other, a distance between the two radiation parts 10 is controlled, and a manufacturing process of the radiation part 10 is simplified. In an embodiment, the dielectric plate 200 is a circuit board. In a thickness direction (defined as a third direction 003 herein) of the circuit board, namely, in an extension direction from the first outer surface 201 to the second outer surface 202, a spatial distance D1 between the two radiation parts 10 is controlled to meet a condition: D1≤1/2λ. In other words, a thickness of the circuit board is controlled to not exceed half a wavelength, to ensure pitch coverage of the two radiation parts 10 along the third direction 003.

In embodiments of FIG. 8 and FIG. 9, the two radiation parts 10 are provided with a same shape and a same size. In some embodiments, it is further provided that the two connection parts 20 are also of a same shape and a same size, and that extension directions of the two connection parts 20 are also the same. Further, a projection, on the second outer surface 202 along the third direction 003, of the connection part 20 on the first outer surface 201 at least overlaps the shape of the connection part 20 on the second outer surface 202. In some embodiments, the projection of the connection part 20 on the first outer surface 201 alternatively completely coincides with the shape of the connection part on the second outer surface 202. In this embodiment, there is also a phase difference of 180 degrees between signals transmitted by the two connection parts 20. It may be understood that, in some other embodiments, when the two radiation parts 10 have the same shape and the same size, the two connection parts 20 may be alternatively respectively located at different positions. In other words, a projection, on the second outer surface 202, of the connection part 20 on the first outer surface 201 may be alternatively spaced apart from the connection part 20 on the second outer surface 202.

Refer to a partial schematic diagram of the first outer surface 201 in FIG. 8a, the connection part 20 on the first outer surface 201 has a structure that is substantially rectangular. The rectangular structure is symmetrically disposed relative to the first axis 103, and is easy to manufacture. In some other embodiments, the connection part 20 may also be disposed in another axisymmetric structure roughly in a trapezoid shape. The connection portion 12 between the radiation part 10 and the connection part 20 is also located on the first axis 103, and is located at one end of the connection part 20. The radiation part 10 extends in a direction away from the first axis 103 along the first direction 001, and at the same time, the first edge part 111 is also located on one side of the first axis 103 along the first direction 001.

The radiation part 10 on the second outer surface 202 has a projection 10' on the first outer surface 201 in the third direction 003. The projection 10' has the same shape and size as the radiation part 10 on the first outer surface 201. The projection 10' also extends toward the other side relative to the first axis 103 along the first direction 001, and at the same time, a projection region of the projection 10' corresponding to the first edge part 111 is located at the other side of the first axis 103. To be specific, a contour shape of the radiation part 10 on the first outer surface 201 and a contour shape of the projection 10' of the radiation part 10 on the second outer surface 202 are symmetrical to each other and mirror each other compared with the first axis 103. With such a structure, the antenna element 100 is formed as a heteroplanar dipole antenna element, and two symmetric radiation parts 10 of the antenna element 100 can obtain a shape of a symmetrical horizontal directivity pattern, and facilitate adjustment of impedance matching of the antenna element 100.

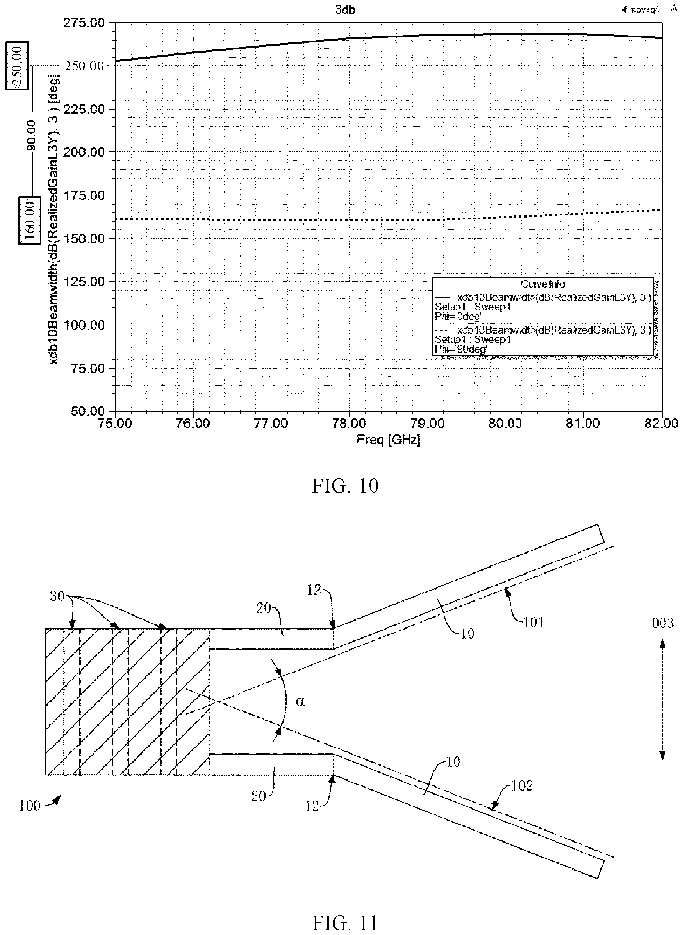

Through simulation analysis, it can be learned that, effect of directivity patterns of the antenna element 100 in embodiments of FIG. 8 and FIG. 9 tend to be consistent with the effect in FIG. 4. However, for an azimuth and a pitch 3 dB beam width of the antenna element 100 in this application, refer to FIG. 10. In a determining range of 75 GHz to 82 GHz, the pitch 3 dB beam width of the antenna element 100 is maintained at more than 250 degrees. Compared with a 220-degree pitch beam width of the vehicle-mounted antenna 100a shown in FIG. 5, large pitching direction coverage is also improved.

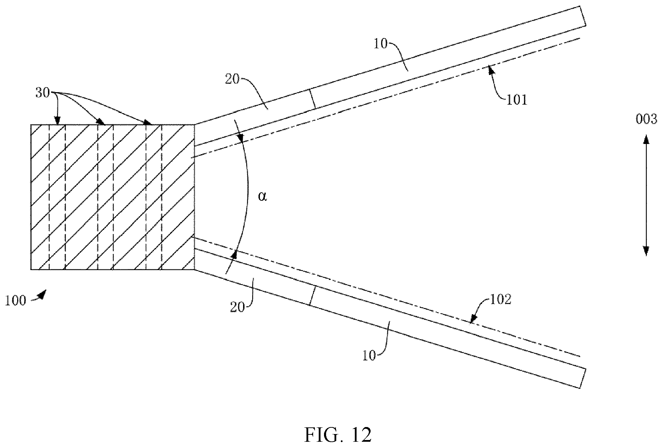

However, in some other embodiments, refer to schematic cross-sectional diagrams of the antenna element 100 shown in FIG. 11 and FIG. 12. The antenna element 100 may alternatively be in a form of a sheet metal structure, where the two radiation parts 10 are respectively disposed on a first plane 101 and a second plane 102. A structure of a sheet metal antenna has rigidity, and does not need to be attached to a substrate, so that relative positions of the two radiation parts 10 may be ensured to be stable by using the rigidity of the sheet metal antenna. In this embodiment, an included angle α is formed between a plane on which the first plane 101 is located and a plane on which the second plane 102 is located. At a position of the antenna element 100 shown in FIG. 11, the first plane 101 and the second plane 102 are spaced apart from each other, so that a radiation part 10 on the first plane 101 and a radiation part 10 on the second plane 102 are spaced apart from each other.

Further, in the third direction 003, a distance between respective connection portions 12 of the two radiation parts 10 is less than a maximum distance between the two radiation parts 10. In other words, the two connection parts 20 are close to each other, and the two radiation parts 10 are opposite to each other. In the schematic diagram of FIG. 11, the two connection parts 20 extend in a parallel attitude. In the schematic diagram of FIG. 12, the two connection parts 20 are also respectively located on the first plane 101 and the second plane 102, a relative distance between the two connection parts 20 is small, and a relative distance between the two radiation parts 10 is large. For embodiments of FIG. 11 and FIG. 12, because the two radiation parts 10 are disposed at an included angle along the third direction 003, a beam width of the antenna element 100 in a pitching direction may be further widened, so that the antenna element 100 can implement larger coverage in the pitching direction.

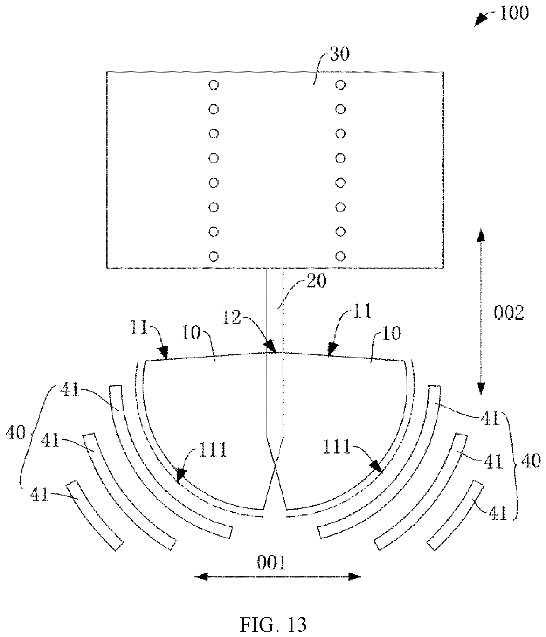

Refer to FIG. 13. In an embodiment, the antenna element 100 further includes directors 40. There are two directors 40, and the director 40 each are disposed corresponding to one radiation part 10, and are disposed at a spacing outside the corresponding radiation part 10. Further, the director 40 corresponds to a first edge part 111 of one radiation part 10. As shown, the director 40 is disposed outside the first edge part 111. The director 40 is configured to guide a propagation direction of the radiation part 10, so that a signal propagated outward through the first edge part 111 can be transmitted to a larger horizontal direction range by the guidance of the director 40.

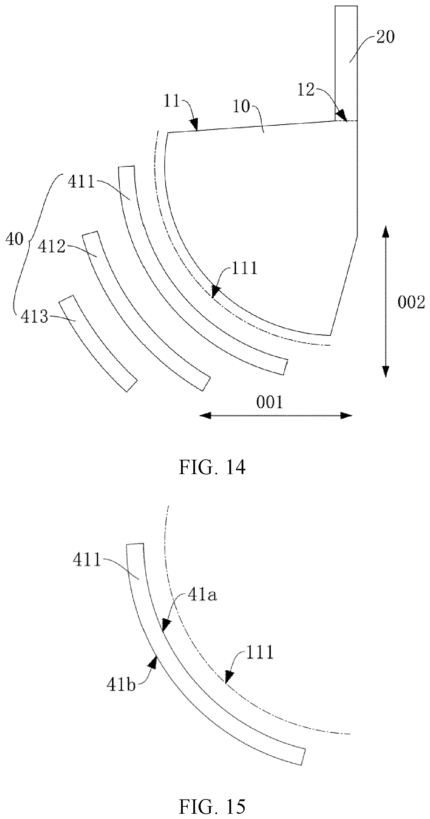

This may be understood with reference to FIG. 14. For a radiation part 10 and a director 40 that are located on a same side, the director 40 needs to be located on a side that is of the radiation part 10 and that is away from the connection part 20, and a position corresponds to a position of the first edge part 111. In other words, along the first direction 001, the director 40 is located on a side that is of the radiation part 10 and that is away from the connection part 20, and along the second direction 002, the director 40 is also located on the side that is of the radiation part 10 and that is away from the connection part 20. The director 40 includes at least one parasitic segment 41. In the schematic diagram of FIG. 14, the director 40 includes a first parasitic segment 411, a second parasitic segment 412, and a third parasitic segment 413. In other embodiments, the number of parasitic segments 41 in the director 40 may alternatively be one, two, or more than three.

A shape of the parasitic segment 41 matches a shape of the first edge part 111. Because the first edge part 111 is of a linear structure, and the parasitic segment 41 is of a planar structure, the matching between the shape of the first edge part 111 and the shape of the parasitic segment 41 herein may be understood as follows: An outer contour of the parasitic segment 41 includes a first parallel edge 41a and a second parallel edge 41b that are opposite to each other (as shown in FIG. 15). In addition, shapes of the first parallel edge 41a and the second parallel edge 41b are the same as or similar to the shape of the first edge part 111. Two ends of the first parallel edge 41a are respectively connected to two ends of the second parallel edge 41b, so that a shape of the parasitic segment 41 matches the shape of the first edge part 111. In an embodiment, sizes of the first parallel side 41a and the second parallel side 41b are further reduced relative to a size of the first edge part 111, to avoid affecting arraying of the antenna elements 100 due to an excessively large area overhead of the director 40. A person skilled in the art may know that, "shape matching" does not strictly define a correspondence that definitely exists between the shapes of the parasitic segment 41 and the first edge part 111, and that the shapes of the parasitic segment 41 and the first edge part 111 are the same, similar, or have no excessive deviation falls within the scope of this application, as long as a radiation direction can be guided.

In the schematic diagram of FIG. 14, the first parasitic segment 411, the second parasitic segment 412, and the third parasitic segment 413 are sequentially disposed at spacings along the first direction 001. Further, shapes of the parasitic segments 41 are matched with each other. The first parasitic segment 411 is located on a side close to the first edge part 111, and the third parasitic segment 413 is located on a side away from the first edge part 111. In addition, sizes of the first parasitic segment 411, the second parasitic segment 412, and the third parasitic segment 413 are different. A shape of the first parasitic segment 411 is large, and a shape of the third parasitic segment 413 is small. In other words, for each parasitic segment 41 in the director 40, a size of the parasitic segment 41 close to the first edge part 111 may be set to be greater than a size of the parasitic segment 41 away from the first edge part 111. Similarly, when the antenna elements 100 form an array, it may be avoided that two adjacent antenna elements 100 form a cross and cause coupling. In some embodiments, the parasitic segments 41 may also be disposed sequentially at spacings along vectors formed by the first direction 001 and the second direction 002.

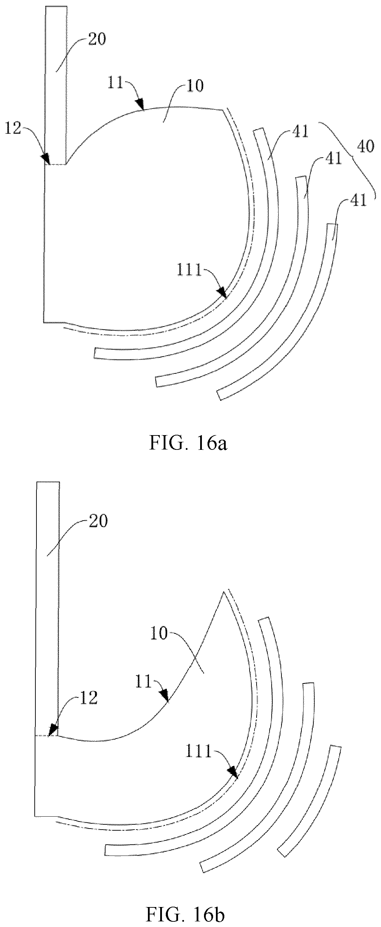

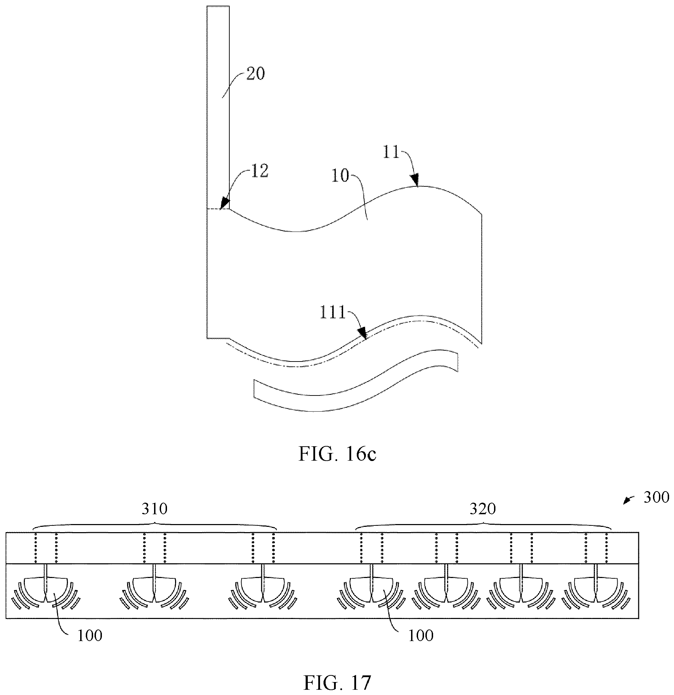

FIG. 16a, FIG. 16b, and FIG. 16c further show shapes and arrangement manners of the director 40 of the radiation part 10 when the radiation part 10 is constructed in crescent-shaped, blade-shaped, and flag-shaped structures, and respectively correspond to the structures of the radiation part 10 shown in FIG. 6a, FIG. 6b, and FIG. 6c. It can be seen that, in the embodiment shown in the figure, a shape of each parasitic segment 41 also matches a shape of a first edge part 111 corresponding to the parasitic segment 41, and a size of each parasitic segment 41 also tends to decrease sequentially.

For schematic diagrams of structures of the antenna element 100 such as FIG. 2 and FIG. 8, in the foregoing embodiments, the feeding part 30 is fed in a microstrip feeding manner or a substrate integrated waveguide (Substrate integrated waveguide, SIW) manner. When feeding is performed in the substrate integrated waveguide manner, there is a phase difference of 180 degrees between two connection parts 20 respectively located on the first outer surface 201 and the second outer surface 202. However, when the feeding part 30 is fed by using a microstrip, a one-to-two power splitter is further disposed to separately feed a signal to the two connection parts 20. In some other embodiments, based on different forms of the antenna element 100 or based on requirements of different use scenarios, the feeding part 30 may further perform feeding in a coaxial feeding manner. However, there are also many manners for implementing a phase difference of 180 degrees of signals fed by the two radiation parts 10, and all manners may be applied to the structure of the antenna element 100.

In an embodiment, as shown in FIG. 8, when the feeding part 30 performs feeding by using a substrate integrated waveguide, a channel width L2 of the substrate integrated waveguide meets a condition: $3/8\lambda \leq L2 \leq 5/8\lambda$. The channel width L2 of the substrate integrated waveguide is limited, so that feeding efficiency of the feeding part 30 can be improved.

The antenna element manufacturing method in this application may specifically include the following steps.

S10: Dispose a feeding part 30 on a substrate.

S20: Dispose a connection part 20 and two radiation parts 10 spaced apart from each other, and connect the two radiation parts 10 to the feeding part 30 by using the connection part 20, where the radiation part 10 is a plate-shaped structure filled with metal, and includes a first edge part 111 having a curved shape, a radiation direction of the first edge part 111 departs from the connection part 20, and a length L1 of the first edge part 111 meets a condition: $1/8\lambda \leq L1 \leq 3/8\lambda$, where $\lambda$ is a wavelength, in a medium, of an electromagnetic wave signal transmitted by an antenna element 100.

It may be understood that the antenna element manufacturing method provided in this application may be used to manufacture the foregoing antenna element 100 in this application. The feeding part 30 is manufactured on the substrate, and the connection part 20 and the radiation part 10 may also be manufactured on the substrate, or the connection part 20 and the radiation part 30 employ a structure of a sheet metal antenna. Because of a mating relationship between the connection part 20 and the radiation parts 10, the connection part 20 and the radiation parts 10 may be manufactured at the same time, or may be manufactured and assembled separately. However, when the radiation part 10, the connection part 20, and the feeding part 30 are all formed on the substrate, the radiation part 10, the connection part 20, and the feeding part 30 may be manufactured simultaneously. That is, in the foregoing method, step S10 and step S20 only show that the feeding part 30 may be separately manufactured, and the connection part 20 and the radiation part 10 may also be separately manufactured. However, an order in which the feeding part 30 and the connection part 20 and the radiation part 10 are manufactured is not limited. In some embodiments, by using the method in this application, the connection part 20 and the radiation part 10 may be first manufactured, then the feeding part 30 may be manufactured, and finally a structure of the antenna element 100 may be formed.

A structure limitation of the radiation part 10 in the manufacturing method is the same as that of the antenna element 100. Therefore, beneficial effect achieved by the antenna element 100 obtained by using the method is also similar to beneficial effect of the antenna element 100. Expansion of embodiments of the method may also be obtained based on the foregoing implementations of the antenna element 100. Details are not described one by one in this specification.

FIG. 17 shows an array antenna 300 according to this application. The array antenna 300 provided in FIG. 17 includes a transmit component 310 and a receive component 320 that are arranged at a spacing. Three antenna elements 100 provided in this application are arranged at spacings in the transmit component 310, and four antenna elements 100 provided in this application are arranged at spacings in the receive component 320. In addition, in the schematic diagram of FIG. 17, all antenna elements 100 are arranged at spacings along the first direction 001. In other embodiments, the antenna elements 100 may also be arranged in a manner such as a circular array. It may be understood that the antenna array 300 may also be used in a radar in this application, and because azimuth coverage of the antenna element 100 is large, azimuth coverage of the antenna array is correspondingly expanded. Further, in the schematic diagram of FIG. 17, the antenna element 100 is an implementation shown in FIG. 8. Therefore, the antenna array 300 further expands pitch coverage at the same time. This helps a terminal assembled with the array antenna 300 better detect a surrounding obstacle.

It can be understood that when the antenna array 300 shown in FIG. 17 is used in a vehicle radar, a millimeter wave mTnR array mode is constituted, where a value of m is 3, a value of n is 4. However, in some other embodiments, a quantity of antenna elements 100 in the transmit component 310 and the receive component 320 of the antenna array 300 may be further correspondingly adjusted. Alternatively, in some embodiments, the antenna array 300 may further configure the antenna element 100 only in the transmit component 310 or the receive component 320, to separately expand coverage for transmitting or receiving a signal by the antenna array.

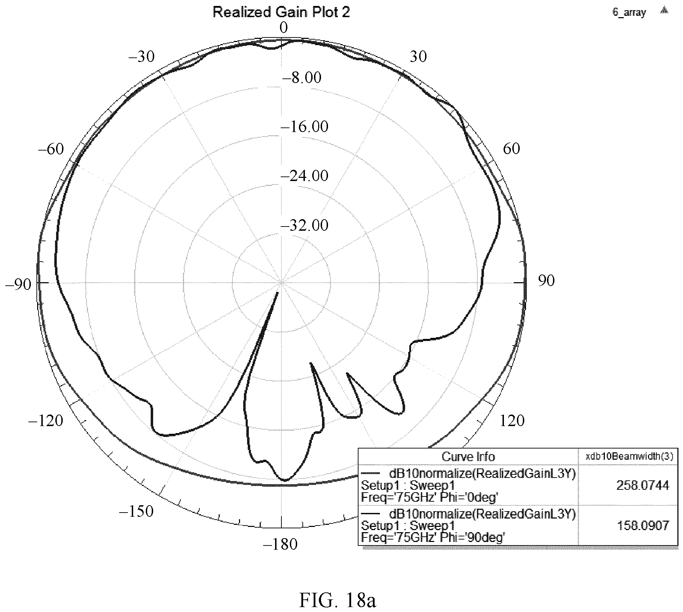

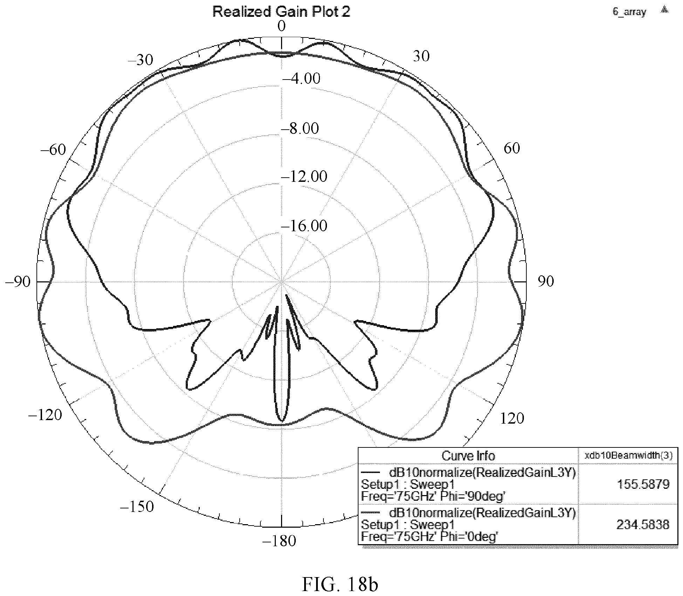

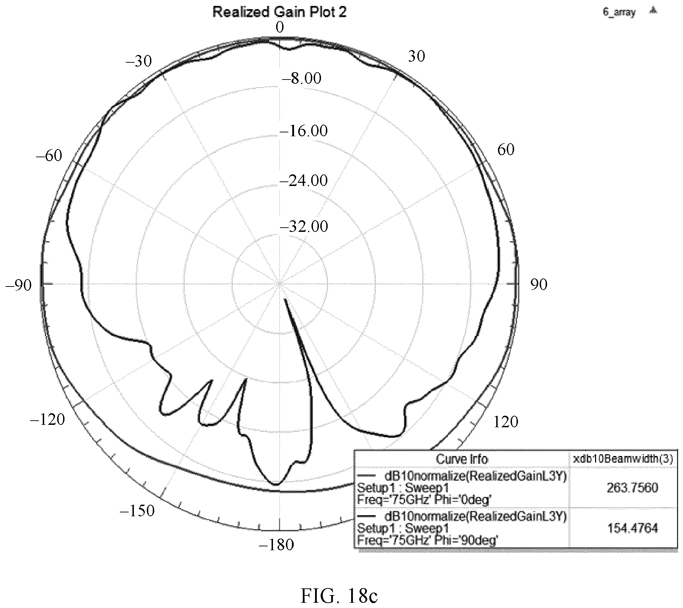

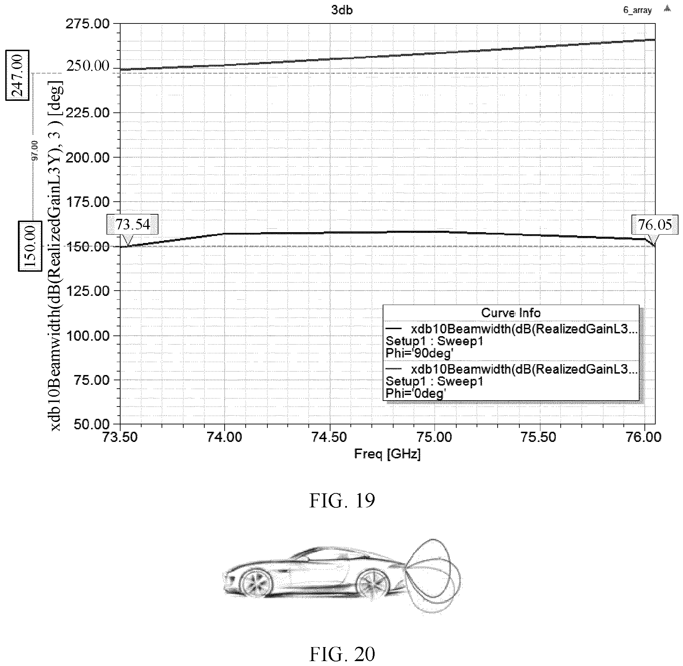

FIG. 18a, FIG. 18b, and FIG. 18c show directivity patterns of different channels obtained through simulation of the 3T4R antenna array 300 shown in FIG. 17. Each channel is a different antenna element 100 in the antenna array 300. FIG. 19 shows a direction/pitch beam width obtained through simulation at different frequencies of the 3T4R antenna array 300 shown in FIG. 17. It can be learned from the foregoing simulation result that, a direction 3 dB beam width of the antenna array 300 shown in FIG. 17 is 150 degrees, and a pitch beam width is 250 degrees.

However, a distance resolution and an angular resolution of the antenna array 300 may be further adjusted by setting a bandwidth and a diameter of the antenna array 300. For the antenna array 300 in this application, refer to the following formula:

$$d_{Res} = \frac{c}{2B} \text{ formula (1)},$$

where c is a light speed. The distance resolution $d_{Res}$ of the antenna array 300 is inversely proportional to the bandwidth B, and a wider bandwidth indicates a higher distance resolution. In the array antenna 300 in this application, an echo bandwidth is 3 GHz, and a directivity pattern bandwidth is also 3 GHz. Therefore, the distance resolution of the array antenna 300 is high.

For the angular resolution, refer to the following formula:

$$\theta = \frac{\lambda}{dL} \text{ formula (2)}.$$

To be specific, for an antenna array 300 with a fixed operating wavelength, an angular resolution θ of the antenna array 300 is inversely proportional to an antenna diameter of the array antenna 300. Here, d is a spacing between the antenna elements 100, and L is a quantity of the antenna elements 100. The antenna diameter is separately directly proportional to the spacing and the quantity of the antenna elements 100. When the spacing between the antenna elements 100 is larger and the quantity is larger, the diameter of the antenna array 300 is correspondingly larger, and the angular resolution is higher. Therefore, the angular resolution of the array antenna 300 can also be improved by adjusting the antenna diameter of the array antenna 300, thereby meeting a use requirement.

In an embodiment, the array antenna 300 may further include a planar lens (not shown in the figure) or a radome (not shown in the figure), to adjust a direction or a coverage angle of a radiation beam of the array antenna 300. As shown in FIG. 20, when no radome or planar lens is disposed, the array antenna 300 may radiate in parallel to a horizontal direction. However, after the radome or the planar lens is disposed, a tilt angle is formed between the array antenna 300 and the horizontal direction. In other words, a radiation angle of the array antenna 300 is adjusted by using an apparatus such as the radome, so that a radiation direction of the array antenna 300 may be guided to shift towards a preset direction. Further, on the basis of the large inherent coverage of the array antenna 300, a detection direction of the array antenna 300 is further guided, and the array antenna 300 is also protected. In the schematic diagram of FIG. 20, for a vehicle, the vehicle is more about detecting an obstacle on the ground. Therefore, a planar lens or a radome may be disposed to guide the radiation direction of the array antenna 300 to tilt towards the ground, thereby implementing a better detection effect.

The foregoing descriptions are merely specific embodiments of this application, but are not intended to limit the protection scope of this application. Any variation or replacement, for example, reducing or adding a mechanical part, and changing a shape of the mechanical part, readily figured out by a person skilled in the art within the technical scope disclosed in this application shall fall within the protection scope of this application. When no conflict occurs, embodiments of this application and the features in embodiments may be mutually combined. Therefore, the protection scope of this application shall be subject to the protection scope of the claims.

**Claims**

1. An antenna element, comprising a feeding part, a connection part, and two radiation parts, wherein the connection part is connected between the feeding part and the radiation parts, and the feeding part is configured to separately feed a signal to the two radiation parts;

   the radiation part is constructed as a plate-shaped structure filled with metal, and the two radiation parts are disposed at a spacing; and the radiation part further comprises a first edge part, the first edge part is in a curved shape, a radiation direction of the first edge part faces a direction in which the radiation part departs from the connection part, and a length L1 of the first edge part meets a condition:

$$1/8\lambda \leq L1 \leq 3/8\lambda,$$

   wherein
   λ is a wavelength, in a medium, of an electromagnetic wave signal transmitted by the antenna element.

2. The antenna element according to claim 1, wherein there are two connection parts, the two connection parts are disposed at a spacing, and each connection part is connected between the feeding part and one radiation part.

3. The antenna element according to claim 2, wherein the two radiation parts are located on a same plane, and are disposed at a spacing on the plane; or the two radiation parts are respectively located on a first plane and a second plane, and the first plane and the second plane are disposed at a spacing.

4. The antenna element according to claim 3, wherein the two radiation parts are respectively located on the first plane and the second plane, and the first plane is parallel to the second plane.

5. The antenna element according to claim 3 or 4, wherein the two radiation parts are respectively located on the first plane and the second plane, and a projection, on the second plane, of a connection part located on the first plane at least overlaps a shape of a connection part located on the second plane.

6. The antenna element according to any one of claims 1 to 5, wherein shapes and sizes of the two radiation parts are the same, and radiation directions of two first edge parts are axially symmetrical.

7. The antenna element according to any one of claims 1 to 6, wherein the antenna element further comprises two directors, and the directors each correspond to a first edge part of one radiation part and are disposed at a spacing.

8. The antenna element according to claim 7, wherein the director comprises at least one parasitic segment, and a shape of the parasitic segment matches the shape of the first edge part.

9. The antenna element according to claim 8, wherein the director comprises a plurality of parasitic segments, and the plurality of parasitic segments are arranged at spacings; and/or
   sizes of the plurality of parasitic segments are sequentially reduced.

10. The antenna element according to any one of claims 1 to 9, wherein the length L1 of the first edge part meets a condition: L1=1/4λ.

11. The antenna element according to any one of claims 1 to 10, wherein the feeding part feeds electricity in one manner of a substrate integrated waveguide, microstrip feeding, or coaxial feeding.

12. The antenna element according to claim 11, wherein the feeding part feeds electricity by using the substrate integrated waveguide, and a channel width L2 of the substrate integrated waveguide meets a condition: 3/8λ≤L2≤5/8λ.

13. An antenna element manufacturing method, comprising the following steps:

    disposing a feeding part on a substrate; and disposing a connection part and two radiation parts spaced apart from each other, and connecting the two radiation parts to the feeding part by using the connection part, wherein the radiation part is a plate-shaped structure filled with metal, and comprises a first edge part having a curved shape, a radiation direction of the first edge part departs from the connection part, and a length L1 of the first edge part meets a condition: $1/8\lambda \leq L1 \leq 3/8\lambda$, wherein $\lambda$ is a wavelength, in a medium, of an electromagnetic wave signal transmitted by an antenna element.

14. An array antenna, comprising a transmit component and a receive component that are arranged at a spacing, wherein the transmit component and the receive component comprise at least one antenna element according to any one of claims 1 to 12.

15. A radar, comprising a microwave integrated circuit, and the antenna element according to any one of claims 1 to 12, or the array antenna according to claim 14, wherein the microwave integrated circuit and the antenna element or the array antenna are electrically connected.

16. A terminal, comprising the radar according to claim 15.

17. The terminal according to claim 16, wherein the terminal is a smart home device, an intelligent manufacturing device, or an intelligent transportation device.

FIG. 1

FIG. 2

FIG. 3

FIG. 4

FIG. 5

FIG. 6a

FIG. 6b

FIG. 6c

FIG. 7a

FIG. 7b

FIG. 8

FIG. 8a

FIG. 9

FIG. 10

FIG. 11

FIG. 12

FIG. 13

FIG. 14

FIG. 15

FIG. 16a

FIG. 16b

FIG. 16c

FIG. 17

FIG. 18a

FIG. 18b

FIG. 18c

FIG. 19

FIG. 20

<table>
<tr><td colspan="2">INTERNATIONAL SEARCH REPORT</td><td colspan="2">International application No.<br>**PCT/CN2022/086372**</td></tr>
</table>

**A. CLASSIFICATION OF SUBJECT MATTER**

H01Q 1/36(2006.01)i

According to International Patent Classification (IPC) or to both national classification and IPC

**B. FIELDS SEARCHED**

Minimum documentation searched (classification system followed by classification symbols)

H01Q

Documentation searched other than minimum documentation to the extent that such documents are included in the fields searched

Electronic data base consulted during the international search (name of data base and, where practicable, search terms used)

WPI, EPODOC, CNKI, CNPAT: 辐射, 曲, 弧, 圆, 弓, 扇, 长度, 平板, 引向, 寄生, 天线, radiat+, curve, circular, arc, plate, length, antenna, parasitic

**C. DOCUMENTS CONSIDERED TO BE RELEVANT**

| Category* | Citation of document, with indication, where appropriate, of the relevant passages | Relevant to claim No. |
|---|---|---|
| X | US 2006022876 A1 (ASAHI GLASS CO., LTD.) 02 February 2006 (2006-02-02)<br>description, paragraphs [0079]-[0120] | 1-17 |
| A | CN 105119044 A (HUAWEI TECHNOLOGIES CO., LTD.) 02 December 2015 (2015-12-02)<br>entire document | 1-17 |
| A | WO 2021023083 A1 (HUAWEI TECHNOLOGY CO., LTD.) 11 February 2021 (2021-02-11)<br>entire document | 1-17 |

☐ Further documents are listed in the continuation of Box C.    ☑ See patent family annex.

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **24 June 2022** | **12 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/086372**

| Patent document cited in search report | | | Publication date (day/month/year) | Patent family member(s) | | | Publication date (day/month/year) |
|---|---|---|---|---|---|---|---|
| US | 2006022876 | A1 | 02 February 2006 | JP | 2006203851 | A | 03 August 2006 |
| CN | 105119044 | A | 02 December 2015 | None | | | |
| WO | 2021023083 | A1 | 11 February 2021 | CN | 112350047 | A | 09 February 2021 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110448433